Europäisches Patentamt

(19) European Patent Office

Office européen des brevets

(11) Publication number: **0 129 096**
**B1**

## EUROPEAN PATENT SPECIFICATION

(45) Date of publication of patent specification: 20.05.87

(51) Int. Cl.⁴: **F 15 B 15/24**, F 16 J 1/00

(21) Application number: **84105915.7**

(22) Date of filing: **24.05.84**

(54) Stroke-limiting collar for a piston and cylinder.

(30) Priority: **13.06.83 US 504004**

(43) Date of publication of application:
**27.12.84 Bulletin 84/52**

(45) Publication of the grant of the patent:
**20.05.87 Bulletin 87/21**

(84) Designated Contracting States:
**AT BE CH DE FR GB IT LI NL SE**

(56) References cited:
**DE-A-2 340 555**
**DE-A-2 437 753**
**DE-A-2 651 398**
**DE-B-1 247 138**
**US-A-1 496 485**
**US-A-3 921 504**

(73) Proprietor: **DEERE & COMPANY**
**1 John Deere Road**
**Moline Illinois 61265 (US)**

(72) Inventor: **Nelson, Roger John**
**3815 Clearview Drive**
**Cedar Falls Iowa 50613 (US)**

(74) Representative: **Collins, Geoffrey Stainton et al**
**c/o Reddie & Grose 16 Theobalds Road**
**London WC1X 8PL (GB)**

Courier Press, Leamington Spa, England.

## Description

This invention relates to a stroke-limiting collar for a piston and cylinder unit in which the collar comprises two complimentary relatively rotatable co-operating cam members each having a piston rod-receiving aperture therein, a cam surface at one end for engagement with the cam surface of the other cam member, and an abutment surface at the other end. The cam surfaces are slidable one on the other to adjust the spacing between the abutment surfaces on relative rotation of the cam members, and these members are releasably lockable against such rotation.

In order to limit the stroke of the piston of a piston and cylinder unit, it is generally known to arrange spacer collars side-by-side on the piston rod so that on the inward stroke of the piston the collars will finally become sandwiched between the cylinder and the outer end of the rod, thus preventing further inward movement of the rod (DE—A—2651398). The number of collars and their thickness determines the particular limit set on the stroke, but individual collars are not adjustable.

A collar is described in US—A—3 921 504 which has a similar function but which is disposed within the cylinder. It has the features referred to initially above, and is therefore adjustable in depth to enable the stroke limit to be varied. In particular, the two cam members which comprise the collar and which are annular cam plates through which the rod passes are formed with ramps or cam surfaces on their end faces. The ramps of the two co-operating cam members engage one another and, on turning one of the members, the ramps slide on one another to increase or decrease the overall depth of the collar. One cam plate can be rotated for adjustment by a pinion engaging the outer periphery of the plate which is in the form of a rack. The two plates are bolted together, and the bolts extend from the ends of the collar.

Thus the manner of adjustment is complex and the disposition of the locking bolts is inconvenient and in particular access to them is difficult.

According to the invention the stroke-limiting collar is provided for mounting on the piston rod of the piston and cylinder unit, the cam members have flanges which extend radially outwardly from a central body member, the cam surfaces are on the flanges, and the cam members are releasably lockable against the said rotation at the flanges.

With such a design, since the cam members are releasably lockable at the flanges, the locking means, e.g. bolts, can be accommodated more conveniently. If the flanges are bolted together then the bolts can be disposed at the side of the bodies of the cam members and need not extend beyond the ends of the collar. In this way the entire areas of the two outer ends of the collar can serve as abutment surfaces, and when a plurality of collars is mounted on a piston rod the position of the bolts still permits easy access to them for a spanner to release or tighten them.

Preferably the cam members are identical for ease of manufacture and of use.

In order that the collar can be mounted and dismounted without freeing an end of the piston rod, the piston rod-receiving aperture desirably comprises a U-shaped slot opening at the periphery of the cam member. Thus the cam members can be very easily slipped on and off the rod by way of the slot when necessary.

The invention also relates to a piston and cylinder unit with a said collar or collars mounted on its piston rod.

An embodiment of the invention will now be described in relation to the accompanying diagrammatic drawings in which:

Fig. 1 is a plan view of a cam member of a stroke-limiting collar for mounting on the piston rod of a hydraulic piston and cylinder unit used, for example, to set the operating depth of an agricultural implement, e.g. a planter;

Fig. 2 is a side view of the cam member looking in the direction of II—II in Fig. 1; and

Fig. 3 is a side view of a pair of the cam members of Figs. 1 and 2 forming a stroke-limiting collar.

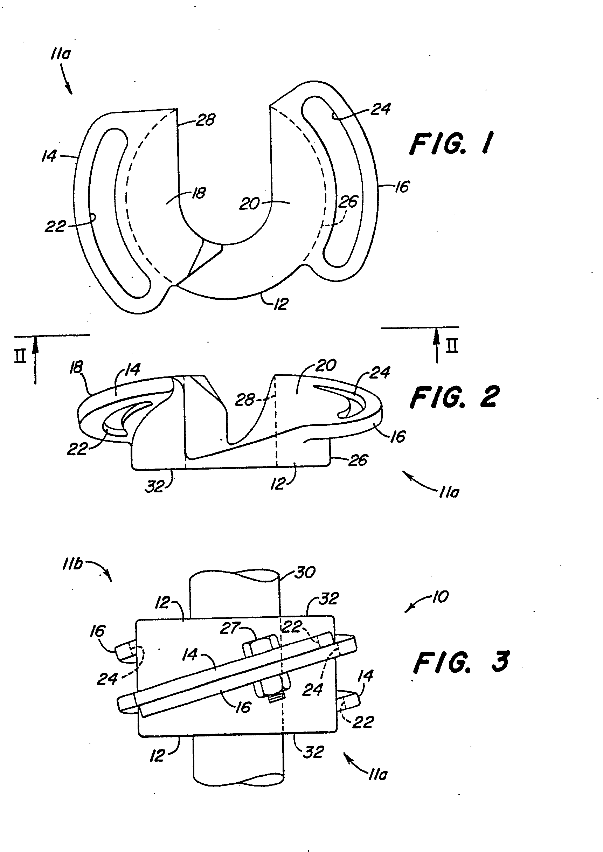

The stroke-limiting collar (designated 10) is comprised of a pair of identical cam members 11a and 11b which mate together, as shown in Fig. 3.

Referring now to Figs. 1 and 2, the cam member 11a has a generally cylindrical body 12, the upper portion (in the Fig. 2 view) of which has a pair of flanges or ramp members 14 and 16 which extend radially outwardly from the body 12 on either side. The ramp members 14 and 16 provide a pair of inclined axially and radially extending cam surfaces 18 and 20, respectively. The ramp members have arcuately extending guide slots 22 and 24 with inner edges which are spaced radially outwardly from outer peripheral surface 26 of the body 12 in order to provide clearance for attaching bolts 27 which are shown in Fig. 3.

A U-shaped aperture or slot 28 for receiving the piston rod 30 of a hydraulic piston and cylinder unit extends into the central portion of the body 12. The slot 28 permits the cam members 11a and 11b of the collar 10 to be slid on and off the rod without disconnecting the rod from the apparatus to which it is connected. The size of the slot 28 can be varied to accommodate different rod sizes.

As shown in Fig. 3, the collar 10 is formed by sliding a pair of cam members 11a and 11b onto the rod 30, each with its ramp members 14 engaging the ramp member 16 of the other cam member. The cam members may be rotated with respect to each other similarly to a screwing action until the coupled pair has the desired thickness between the oppositely facing abutment surfaces 32 at the outer ends of the bodies 12. Then, the two cam members are bolted rigidly together by means such as bolts 27 or cap screws.

It will be seen that these bolts 27 are readily accessible and do not extend beyond the abutment surfaces 32. A plurality of collars 10 can be mounted on the rod 30 and the bolts will remain accessible for turning by a wrench or spanner.

## Claims

1. A stroke-limiting collar (10) for a piston and cylinder unit in which the collar (10) comprises two complimentary relatively rotatable co-operating cam members (11a, 11b) each having a piston rod-receiving aperture therein, a cam surface (18, 20) at one end for engagement with the cam surface (20, 18) of the other cam member, and an abutment surface (32) at the other end, the cam surfaces (18, 20) being slidably one on the other to adjust the spacing between the abutment surfaces (32) on relative rotation of the cam members (11a, 11b) and the members being releasably lockable against such rotation characterised in that the stroke-limiting collar (10) is provided for mounting on the piston rod (30) of the piston and cylinder unit, that the cam members (11a, 11b) have flanges (14, 16) which extend radially outwardly from a central body member (12), the cam surfaces (18, 20) are on the flanges (14, 16), and the cam members (11a, 11b) are releasably lockable against the said rotation at the flanges (14, 16).

2. A stroke-limiting collar according to claim 1 characterised in that the cam members (11a, 11b) are identical.

3. A stroke-limiting collar according to claim 1 or 2 characterised in that the flanges (14, 16) are provided with arcuate bolt-receiving guide slots (22, 24) for releasably locking the flanges by the bolts.

4. A stroke-limiting collar according to any preceding claim characterised in that the piston rod-receiving aperture comprises a U-shaped slot (28) opening at the periphery of the cam member (11a, 11b).

5. A stroke-limiting collar according to any preceding claim characterised in that each cam member (11a, 11b) has a pair of flanges (14, 16).

6. A piston and cylinder unit characterised in that it includes a stroke-limiting collar (10) according to any preceding claim mounted on its piston rod (30).

7. A piston and cylinder unit according to claim 6 characterised in that it includes a plurality of said collars (10).

## Patentansprüche

1. Hubbegrenzungskragen (10) für eine aus Kolben und Zylinder bestehende Einheit, in der der Kragen (10) zwei relativ zueinander drehbare, komplimentäre und zusammenwirkende Nockenglieder (11a, 11b) aufweist, die jedes eine Öffnung zur Aufnahme einer Kolbenstange, eine Nockenfläche (18, 20) an einem Ende zum Angreifen an eine Nockenfläche (20, 18) des anderen Nockengliedes und eine Anschlagfläche (32) am anderen Ende umfaßt, wobei die Nockenflächen (18, 20) aufeinander gleitbar sind, um den Abstand zwischen den Anschlagsflächen (32) aufgrund einer relativen Drehung der Nockenglieder (11a, 11b) einzujustieren, und lösbar gegen Drehung verriegelbar sind, dadurch gekennzeichnet, daß der Hubbegrenzungskragen (10) zur Montage auf der Kolbenstange (30) der Kolben/Zylinder-Einheit ausgebildet ist und die Nockenglieder (11a, 11b) Flansche (14, 16) aufweisen, die sich von einem zentralen Körperglied (12) aus radial nach außen erstrecken, und gegen die genannte Drehung an den Flanschen (14, 16) lösbar verriegelbar sind.

2. Hubbegrenzungskragen nach Anspruch 1, dadurch gekennzeichnet, daß die Nockenglieder (11a, 11b) identisch sind.

3. Hubbegrenzungskragen nach Anspruch 1 oder 2, dadurch gekennzeichnet, daß die Flansche (14, 16) mit gebogenen, Bolzen aufnehmenden Führungsschlitzen (22, 24) zur lösbaren Verriegelung der Flansche durch die Bolzen versehen sind.

4. Hubbegrenzungskragen nach irgendeinem der voranstehenden Ansprüche, dadurch gekennzeichnet, daß die die Kolbenstange aufnehmende Öffnung einen U-förmigen Schlitz (28) umfaßt, der zum Umfang des Nockengliedes (11a, 11b) hin offen ist.

5. Hubbegrenzungskragen nach irgendeinem der voranstehenden Ansprüche, dadurch gekennzeichnet, daß jedes Nockenglied (11a, 11b) zwei Flansche (14, 16) aufweist.

6. Kolben- und Zylinder-Einheit, dadurch gekennzeichnet, daß sie einen Hubbegrenzungskragen (10) nach irgendeinem der voranstehenden Ansprüche aufweist, die auf seiner Kolbenstange (30) montiert ist.

7. Kolben- und Zylindereinheit nach Anspruch 6, dadurch gekennzeichnet, daß sie eine Mehrzahl der genannten Kragen (10) aufweist.

## Revendications

1. Collier de limitation de course (10) pour un groupe à piston et cylindre dans lequel le collier (10) comprend deux éléments de came associés complémentaires (11a, 11b) qui peuvent tourner l'un par rapport à l'autre, chaque élément comportant une ouverture de réception de la tige de piston, une surface de came (18, 20) à une extrémité pour engagement avec la surface de came (20, 18) de l'autre élément de came, et une surface de butée (32) à l'autre extrémité, les surfaces de came (18, 20) pouvant glisser l'une sur l'autre pour régler la distance entre les surfaces de butée (32) par rotation relative des éléments de came (11a, 11b) et les éléments pouvant être bloqués de façon libérable contre une telle rotation, caractérisé en ce que le collier de limitation de course (10) est prévu pour montage sur la tige de piston (30) du groupe à piston et cylindre, en ce que les éléments de came (11a, 11b) comportent des brides (14, 16) qui s'étendent radialement vers l'extérieur à partir d'un corps central (12), les surfaces de came (18, 20) sont situées sur les brides (14, 16) et les éléments de came (11a, 11b) peuvent être bloqués de façon libérable contre ladite rotation à l'endroit des brides (14, 16).

2. Collier de limitation de course suivant la revendication 1, caractérisé en ce que les éléments de came (11a, 11b) sont identiques.

3. Collier de limitation de course suivant la revendication 1 ou 2, caractérisé en ce que les brides (14, 16) comportent des rainures de guidage courbes (22, 24) de réception de boulon pour bloquer de façon libérable les brides par les boulons.

4. Collier de limitation de course suivant l'une quelconque des revendications précédentes, caractérisé en ce que l'ouverture de réception de tige de piston comprend une ouverture à entaille (28) en forme de U qui débouche à la périphérie de l'élément de came (11a, 11b).

5. Collier de limitation de course suivant l'une quelconque des revendications précédentes, caractérisé en ce que chaque élément de came (11a, 11b) possède deux brides (14, 16).

6. Groupe à piston et cylindre, caractérisé en ce qu'il comprend un collier de limitation de course (10) suivant l'une quelconque des revendications précédentes, monté sur sa tige de piston (30).

7. Groupe à piston et cylindre suivant la revendication 6, caractérisé en ce qu'il comprend une pluralité desdits colliers (10).

FIG. 1

FIG. 2

FIG. 3